## Europäisches Patentamt
## European Patent Office
## Office européen des brevets

(19)

(11) Numéro de publication : **0 284 620 B1**

# FASCICULE DE BREVET EUROPEEN

(12)

(45) Date de publication du fascicule du brevet :
**18.03.92 Bulletin 92/12**

(51) Int. Cl.⁵ : **B01D 29/00, G01N 33/48**

(21) Numéro de dépôt : **87906188.5**

(22) Date de dépôt : **14.09.87**

(86) Numéro de dépôt international :
**PCT/FR87/00354**

(87) Numéro de publication internationale :
**WO 88/01897 24.03.88 Gazette 88/07**

(54) **DISPOSITIF DE DETECTION D'ANALYSE D'IDENTIFICATION ET DE CARACTERISATION PAR FILTRATION ET IMMUNOFILTRATION.**

(30) Priorité : **15.09.86 FR 8612960**

(43) Date de publication de la demande :
**05.10.88 Bulletin 88/40**

(45) Mention de la délivrance du brevet :
**18.03.92 Bulletin 92/12**

(84) Etats contractants désignés :
**AT BE CH DE FR GB IT LI LU NL SE**

(56) Documents cités :
**FR-A- 1 317 224**
**FR-A- 2 093 894**
**FR-A- 2 452 294**
**GB-A- 1 349 564**
**GB-A- 1 489 067**
**US-A- 4 426 295**

(73) Titulaire : **Pinon, Jean-Michel**
**Hopital Maison Blanche**
**F-51092 Reims (FR)**

(72) Inventeur : **BRANDEL, André**
**Société Plastimarne S.A. Z.I. de Mardeuil**
**BP 155 Route de Cumières F-51205 Epernay**
**(FR)**

(74) Mandataire : **Gérardin, Robert Jean René**
**PROT'INNOV INTERNATIONAL SA Résidence**
**de l'Observatoire avenue Georges**
**Clémenceau Boîte Postale 2764**
**F-51066 Reims Cédex (FR)**

## Description

L'invention concerne un dispositif de détection, d'analyse, d'identification et de caractérisation par filtration et immunofiltration.

Les moyens classiques de détection et de quantification, connus à ce jour, ont généralement recours à des techniques et à des procédés globalement q'antitatifs, que ce soit dans l'industrie ou dans le domaine médical.

Dans l'industrie, par exemple, le degré de pollution d'un fluide, en particulier des liquides utilisés dans les systèmes d'asservissement hydraulique, est apprécié par comptage sous microscope, en utilisant une grille déterminée, des particules solides de différentes dimensions retenues par une membrane filtrante de caractéristiques et de dimensions bien définies. Comme on le voit, ce moyen ne permet pas de détecter la pollution chimique, ni de déterminer la pollution bactériologique, qui constituent pourtant des facteurs de pollution parfoirs plus importants que la pollution par particules solides.

Dans le domaine médical, de tels moyens sont utilisés aussi pour révéler et/ou quantifier la présence de substances dans des échantillons de prélèvement, en vue de faciliter un diagnostic et de définir une thérapeutique ou de préparer un réactif ; mais leur emploi restait, jusqu'à présent, exclu dans de nombreux domaines de l'analyse bio-médicale, où d'autres moyens leur étaient préférés, malgré les contraintes et les imprécisions qu'ils présentaient.

On connaît déjà un dispositif de filtration correspondant au préambule de la revendication 1 (brevet **US-A- 4.426.295)**. Le système de rétention est emprisonné par serrage, par l'intermédiaire d'un joint, sous l'effet du vissage d'une partie du dispositif par rapport à l'autre ; sans qu'il soit possible, de ce fait, d'obtenir l'indexation en rotation d'une partie par rapport à l'autre.

La présente invention a pour but de remédier à ces inconvénients.

Le dispositif de détection, d'analyse, d'identification et de caractérisation d'une substance par filtration et immunofiltration selon l'invention comporte un corps en deux parties s'emboîtant l'une dans l'autre, dont l'une située à la partie supérieure, comporte un réservoir et dont l'autre, située à la partie inférieure, comporte un réceptacle muni d'un joint d'étanchéité et d'un système de rétention et de réaction comportant deux plaques à multi-perforations emprisonnant un support de réaction; le réservoir et le réceptacle étant mis en communication avec un circuit extérieur par l'intermédiaire de conduits d'embouts rapportés et de tuyauteries, la solidarisation des deux parties du corps et la compression du système de rétention et de réaction étant obtenues par l'intermédiaire de crochet à rapprochement et démontage rapide; le dispositif se caractérise en ce que la base de la partie comportant le réservoir comporte un évidement dans lequel débouche le réservoir en ce que le système de rétention et de réaction est complété de deux rondelles entretoises comportant des découpes, dont l'une, mince, est disposée entre la plaque à multi-perforations supérieure et le support de réaction et dont l'autre, épaisse, est disposée entre la plaque à multiperforations inférieure et le fond de l'emboîtement et en ce que les deux parties constituant le corps du dispositif sont solidarisées en rotation.

L'évidement dans lequel débouche le réservoir et les découpes des deux rondelles entretoises ont les mêmes dimensions et sont maintenues en concordance par l'indexation des deux parties du corps du dispositif par l'intermédiaire d'un téton fixé dans la base de l'une des parties et d'une rainure aménagée dans l'autre partie.

L'évidement dans lequel débouche le réservoir et les découpes des deux rondelles entretoises sont rectangulaires.

Le corps, les rondelles entretoises et le joint assurant l'étanchéité du dispositif sont réalisés dans une matière transparente.

L'épaisseur de la rondelle entretoise, située sous le support de réacteur est déterminée en fonction du volume de chambre virtuelle nécessaire.

Les avantages obtenus grâce à cette invention consistent essentiellement en ceci, que la vitesse de passage du fluide à travers le support de réaction peut être modulée au cours de la manipulation ; et en ce que le contact entre le fluide et le support de réaction est favorisé.

D'autres caractéristiques et avantages apparaîtront dans la description qui va suivre d'une cellule de filtration, d'ultrafiltration, ou d'immunofiltration à usage médical, donné à titre d'exemple non limitatif, au regard des dessins annexés représentant :

   – figure 1, une vue de face, en coupe, de la cellule,

   – figure 2, une vue de dessus de la cellule.

   – Figure 3, une vue en coupe partielle de la cellule au niveau du support de réaction.

   – Figure 4, une vue en coupe partielle de la cellule au niveau des crochets de solidarisation des deux parties du corps.

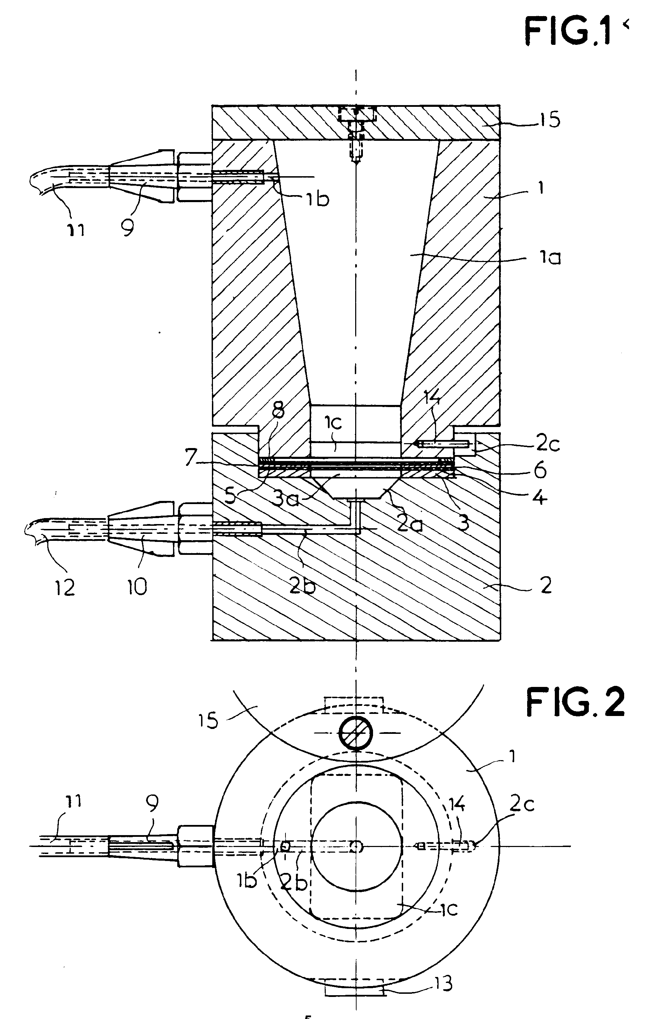

En examinant les figures 1, 2 et 3, on remarque que la partie supérieure 1 du corps de la cellule s'emboîte dans la partie inférieure 2, en emprisonnant le système de réaction constitué de l'entretoise 3 à échancrure rectangulaire 3a, d'une plaque rigide multiperforée 4, soutenant une membrane de filtration 6 en acétate de cellulose, nitrocellulose, ou autre matériau équivalent, et une rondelle entretoise mince 7, munie d'une échancrure 7a, recouverte d'une seconde plaque rigide multiperforée 5, sur le pourtour de laquelle s'applique un joint d'étanchéité 8.

La partie supérieure 1 comporte un réservoir tronconique 1a, débouchant dans un évidement rectangulaire 1c, dont l'ouverture est située juste au dessus de la plaque multiperforée 5. Le réservoir 1a est relié à un circuit extérieur par l'intermédiaire de la canalisation 1b, de l'embout 9 et de la tuyauterie 11. Le réservoir 1a est obturé par un couvercle pivotant 15.

La partie inférieure 2 comporte un réceptacle 2a, raccordé à un circuit extérieur par l'intermédiaire d'un circuit 2b, d'un embout 10 et d'une tuyauterie 12.

Pour des raisons de concordance des échancrures 1c, 3a et 7a les deux parties 1 et 2, constituant le corps de la cellule, sont solidarisées en rotation, par l'intermédiaire de l'ergot 14 et de la rainure 2c.

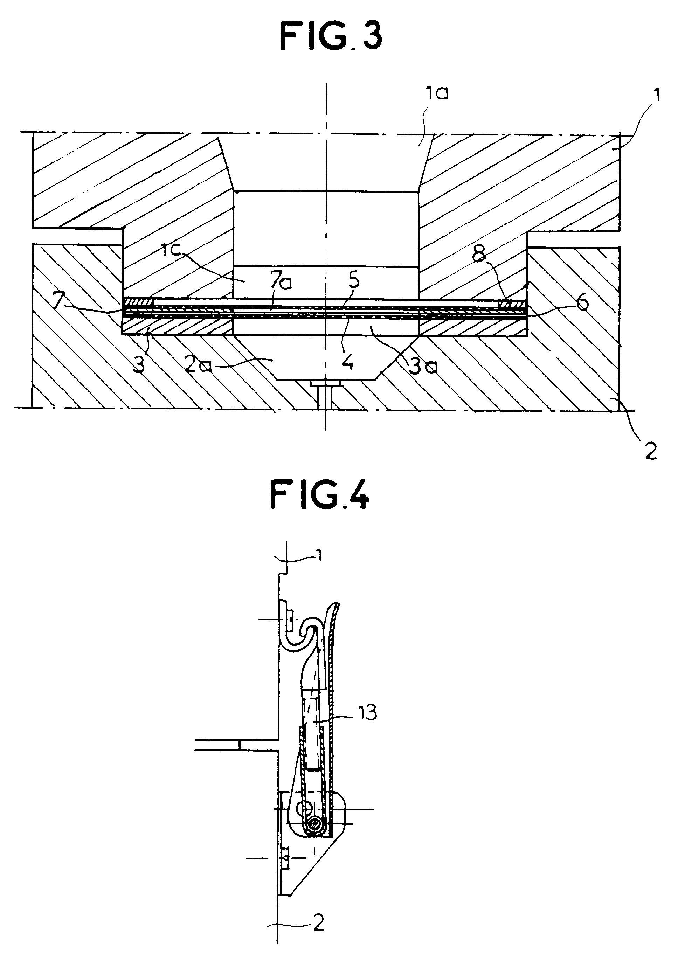

En examinant la figure 4, on remarque que l'étanchéité de la cellule est obtenue par pincement du système de rétention et de révélation et du joint 8 entre les deux parties 1 et 2 du corps, sous l'action des crochets à rapprochement à manoeuvre rapide 13.

Ainsi, le passage de liquides renfermant, notamment, la substance à révéler ou les substances utilisées pour la détection au niveau de la membrane, ou utilisées pour la détection, à travers la membrane support de réaction 6, pourra être obtenu en appliquant une dépression dans le réceptacle 2a. Une quantité de liquide, déterminée en fonction des besoins de la réaction, de l'épaisseur de l'entretoise 3 et des dimensions de l'échancrure 3a, pourra entrer en contact avec la membrane d'acétate de cellulose pendant le temps nécessaire à l'obtention de la réaction.

Ainsi, la membrane 6 étant appliquée contre la plaque multiperforée intérieure 4, ne pourra subir aucun dommage dû à la dépression. De plus, cette membrane ne pourra pas "cloquer" sous l'action du liquide, étant donné la présence de la grille multiperforée supérieure 5.

De cette façon, seule une surface déterminée de la membrane est traversée par le liquide et entre en contact avec celui-ci.

Le dispositif selon l'invention peut être utilisé dans les domaines biologique, chimique et industriel.

Dans le domaine médical il peut être utilisé notamment en immuno-électro-diffusion, en immunofiltration et en immuno-détection.

Il peut être utilisé aussi pour le transfert de produits ou de substances déterminées ou à déterminer, d'un milieu semi-liquide ou équivalent sur une matière absorbante du type nitrocellulose ou équivalent, et pour la détection de substances en solution par filtration sur nitrocellulose ou équivalent et pour caractériser la substance ainsi captée par immuno-filtration avec des marqueurs déterminés.

Le dispositif selon l'invention peut être miniaturisé et être utilisé sur support de réaction à bandellette.

La préparation de membranes en vue de leur utilisation en diagnostic bio-réactif, constitue une application intéressante de ce dispositif.

Cette cellule peut s'utiliser ou s'intégrer dans un système automatisé. Elle peut être aussi utilisée en apesanteur (biologique spatiale).

**Revendications**

1. Dispositif de détection d'analyse, d'identification et de caractérisation d'une substnace par filtration et immunofiltratoin, comportant un corps en deux parties (1 et 2) s'emboîtant l'une dans l'autre, dont l'une (1), située à la partie supérieure, comporte un réservoir et dont l'autre (2), située à la parties inférieure, comporte un réceptacle muni d'un joint d'étanchéité (8) et d'un système de rétention et de réaction comportant deux plaques à multi-perforations (4 et 5) emprisonnant un support de réaction (6) ; le réservoir (1a) et le réceptacle (2a) étant mis en communication avec un circuit extérieur par l'intermédiaire de conduits (1b) et (2b), d'embouts rapportés (9 et 10) et de tuyauteries (11 et 12) ; la solidarisation des deux parties (1 et 2) du corps et la compression du système de rétention et de réaction étant obtenues par l'intermédiaire de crochets (13) à rapprochement et démontage rapide, caractérisé, en ce que la base de la partie comportant le réservoir (1) comporte un évidement (1c) dans lequel débouche le réservoir (1a), en ce que le système de rétention et de réaction (4,5,6) est complété de deux rondelles entretoises (3,7) comportant des découpes (3a,7a) dont l'une, mince (7), est disposée entre la plaque à multi-perforations supérieure (5) et le support de réaction (6) et dont l'autre, épaisse (3), est disposée entre la plaque à multi-perforations inférieure (4) et le fond de l'emboîtement et en ce que les deux parties (1,2) constituant le corps du dispositif sont solidarisées en rotation.

2. Dispositif selon la revendication 1, caractérisé en ce que l'évidement (1c), dans lequel débouche le réservoir (1a) et les découpes (3a et 7a) des deux rondelles entretoises (3 et 7) ont les mêmes dimensions et sont maintenues en concordance par l'indexation des deux parties (1,2) du corps du dispositif par l'intermédiaire d'un ergot (14) fixé dans la base (D) de l'une des parties (1) et d'une racine (2c) aménagée dans l'autre partie.

3. Dispositif selon la revendication 1 ou 2, caractérisé en ce que l'évidement (1c) dans lequel débouche le réservoir (1a) et les découpes (3a et 7a) des deux rondelles entretoises (3 et 7) sont rectangulaires.

4. Dispositif selon la revendication 1, caractérisé en ce que le corps (1,2), les rondelles entretoises (3,7) et le joint (8) assurant l'étanchéité du dispositif, sont réalisés dans une matière transparente.

5. Dispositif selon la revendication 1, caractérisé en ce que l'épaisseur de la rondelle entretoise (3) située sous le support de réaction (6) est déterminée en fonction du volume de chambre virtuelle nécessaire.

**Patentansprüche**

1. Vorrichtung zur Identifizierungsermittlung und zum Kennzeichnen einer Substanz durch Filtrieren oder Immunfiltrieren, die einen Körper aus zwei ineinandergefügten Teilen (1 und 2) umfaßt, von denen der oben angeordnete (1) einen Sammelbehälter enthält und der unten angeordnete (2) einen Auffangbehälter, der mit einer Dichtung (8) und einem Rückhalte- und Reaktionssystem versehen ist, das zwei mehrfach gelochte Platten (4 und 5) enthält, die einen Reaktionsträger (6) umschließen, wobei der Sammelbehälter (1a) und der Auffangbehälter (2a) mittels Leitungen (1b und 2b), angebauten Verbindungsstücken (9 und 10) und Rohrleitungen (11 und 12) mit einem äußeren Kreislauf verbunden sind und die feste Verbindung der beiden Teile (1 und 2) des Körpers und die Komprimierung des Rückhalte- und Reaktionssystems mittels schnell einstellbarer und demontierbarer Haken (13) erreicht wird, **dadurch gekennzeichnet,** daß der untere Abschnitt des den Sammelbehälter enthaltenden Teils (1) eine Aussparung (1c) aufweist, in die der Sammelbehälter (1a) mündet, daß das Rückhalte- und Reaktionssystem (4,5,6) durch zwei mit Ausschnitten (3a,7a) versehenen Zwischenscheiben (3,7) ergänzt ist, von denen eine dünne (7) zwischen der oberen mehrfach gelochten Platte (5) und dem Reaktionsträger (6), und eine dicke (3) zwischen der unteren mehrfach gelochten Platte (4) und dem Boden einer Ausnehmung des Auffangbehälters angeordnet ist, und daß die zwei den Körper der Vorrichtung bildenden Teile (1,2) durch Drehung fest miteinander verbunden werden.

2. Vorrichtung nach Anspruch 1, dadurch gekennzeichnet, daß die Aussparung (1c), in die der Sammelbehälter (1a) mündet, und die Ausschnitte (3a und 7a) der zwei Zwischenscheiben (3 und 7) die gleichen Abmessungen haben und in Lageübereinstimmung gehalten werden durch Fixierung der zwei Teile (1,2) des Körpers der Vorrichtung mittels eines Zapfens (14), der im unteren Abschnitt (D) eines der Teile (1) angebracht ist, und einer Nut (2c), die im anderen Teil angeordnet ist.

3. Vorrichtung nach Anspruch 1 oder 2, dadurch gekennzeichnet, daß die Aussparung (1c), in die der Sammelbehälter (1a) mündet, und die Abschnitte (3a und 7a) der zwei Zwischenscheiben (3 und 7) rechteckig sind.

4. Vorrichtung nach Anspruch 1, dadurch gekennzeichnet, daß der Körper (1,2), die Zwischenacheiben (3,7) und die Dichtung (8), die die Dichtheit der Vorrichtung gewährleistet, aus durchsichtigem Material gefertigt sind.

5. Vorrichtung nach Anspruch 1, dadurch gekennzeichnet, daß die Dicke der Zwischenscheibe (3), die unter dem Reaktionsträger (6) angeordnet ist, in Abhängigkeit von dem Volumen der erforderlichen virtuellen Kammer festgelegt wird.

**Claims**

1. Device for detection, analysis, identification and characterisation of a substance by filtration and immunofiltration, comprising a body in two parts (**1 and 2**) nesting into each other, one of which (**1**), situated at the upper part, comprises a reservoir and the other of which (**2**), situated at the lower part, comprises a receptacle equipped with a gasket (**8**) and a retention and reaction system comprising two multi-perforated plates (**4 and 5**) enclosing a reaction medium (**6**); the reservoir (**1a**) and the receptacle (**2a**) being in communication with an external circuit via conduits (**1b**) and (**2b**), attached joining pieces (**9 and 10**) and pipelines (**11 and 12**); the joining of the two parts (**1 and 2**) of the body and the compression of the retention and reaction system being obtained through adjusting and rapid dismantling hooks (**13**), characterised in that the base of the part comprising the reservoir (**1**) comprises a recess (**1c**) into which the reservoir (**1a**) opens out, in that the retention and reaction system (**4, 5, 6**) is completed by two spacing washers (**3, 7**) comprising cut-outs (**3a, 7a**) one of which, which is thin (**7**), is arranged between the upper multiperforated plate (**5**) and the reaction medium (**6**) and the other of which, which is thick (**3**), is arranged between the lower multi-perforated plate (**4**) and the bottom of the cavity and in that the two parts (**1, 2**) forming the body of the device are coupled in rotation.

2. Device according to Claim 1, characterised in that the recess (**1c**), in which the reservoir (**1a**) opens out and the cut-outs (**3a and 7a**) of the two spacing washers (**3 and 7**) have the same dimensions and are held together by indexing the two parts (**1, 2**) of the body of the device by means of a peg (**14**) fixed at the base (**D**) of one of the parts (**1**) and a housing (**2c**) provided in the other part.

3. Device according to Claim 1 or 2, characterised in that the recess (**1c**) into which the reservoir (**1a**) opens out and the cut-outs (**3a and 7a**) of the two spacing washers (**3 and 7**) are rectangular.

4. Device according to Claim 1, characterised in that the body (**1, 2**), the spacing washers (**3, 7**) and the seal (**8**) ensuring tightness of the device, are made of a transparent material.

5. Device according to Claim 1, characterised in that the thickness of the spacing washer (**3**) situated under the reaction medium (**6**) is determined as a function of the volume of virtual chamber required.

# FIG.1

# FIG.2

# FIG.3

# FIG.4